# EUROPÄISCHE PATENTSCHRIFT

(11) **EP 0 382 706 B1**
(45) Veröffentlichungstag und Bekanntmachung des Hinweises auf die Patenterteilung: **01.09.1993**
(21) Anmeldenummer: 90890009.5
(22) Anmeldetag: 10.01.1990
(51) Int. Cl.: G01B 7/04, G01D 5/26

(54) **Längenmesssystem**
System for measuring length
Système pour mesure de longueur

(30) Priorität: 10.02.1989 AT 285/89
(43) Veröffentlichungstag der Anmeldung: 16.08.1990
(73) Patentinhaber: RSF-Elektronik Gesellschaft m.b.H., A-5121 Tarsdorf 93 (AT)
(72) Erfinder: Rieder, Heinz, A-5110 Oberndorf (AT); Schwaiger, Max, A-5121 Ostermiething (AT)
(74) Vertreter: Hübscher, Heiner, Dipl.-Ing.

(56) Entgegenhaltungen:
- AT-B- 382 966
- DE-A- 3 201 887
- DE-B- 1 623 844

## Beschreibung

Die Erfindung betrifft ein Längenmeßsystem nach dem Oberbegriff des Patentanspruches 1.

Bei Längenmeßsystemen, auf die sich die Erfindung bezieht, kann es sich sowohl um sogenannte absolute Meßsysteme mit codierter Meßteilung als auch um inkrementale Meßsysteme mit aus einem Strichraster oder sonstigen Hell-Dunkelfelder-Kombinationen gebildetem Maßstab handeln. Die Abtastung des Maßstabes über die Abtasteinheit kann nach optischen, optoelektronischen, kapazitiven, induktiven oder magnetischen Meßprinzipien erfolgen, wobei jeweils Maßstab und Meßteilung dem verwendeten Meßprinzip angepaßt sind. Der Mitnehmer stellt die Verbindung des Meßsystems zu jenem Teil her, dessen Länge bzw. Verstellweg zu messen ist, also beispielsweise zu dem Werkzeugschlitten der betreffenden Bearbeitungsachse einer Werkzeugmaschine. Da es praktisch unmöglich ist, die Schlittenführung exakt geradlinig und bzw. oder exakt parallel zum Meßsystem und umgekehrt auszurichten, muß die Möglichkeit geschaffen werden, daß sich der Mitnehmer quer zur Meßrichtung verstellt, ohne daß dadurch eine Längsverstellung zwischen Mitnehmer und Abtasteinheit auftritt. Um dies zu ermöglichen, werden Kupplungskonstruktionen der eingangs genannten Art verwendet.

Aus der AT-B-382 966 ist ein Längenmeßsystem mit den Merkmalen des Oberbegriffes des Patentanspruches 1 bekannt. Bei diesem Längenmeßsystem soll vor allem die Aufgabe gelöst werden, durch Relativverstellung der Abtasteinheit gegenüber dem Mitnehmer unter Abtastung einer Schablone Meßkorrekturen vorzunehmen. Zu diesem Zweck ist der eine Kupplungsteil aus einem vertikalen Zapfen und der andere Kupplungsteil aus einer quer zum Zapfen angebrachten, exzentrisch gelagerten Walze gebildet, wobei die Kupplungsteile durch eine Feder in Eingriff gehalten werden. Eine weitere Feder beaufschlagt einen Tragarm für einen Walzenträger, welcher Tragarm eine Schablone abtastet, um die Exzenterwalze nach dem auf der Schablone vorgesehenen Korrekturprofil zu verdrehen und damit Meßkorrekturen vorzunehmen.

Aus der DE-A-32 01 887 ist eine sich gattungsmäßig von Kupplungen der oben beschriebenen Art unterscheidende, spielfreie Kupplung bekannt, bei der ein Drehgelenk mit zwei rotatorischen Freiheitsgraden und zusätzlich eine Linearführung mit zwei translatorischen Freiheitsgraden senkrecht zur Meßrichtung vorgesehen und hintereinandergeschaltet werden. Die Linearführung kann aus einer Magnetplatte und einem mit einer sphärischen Fläche anliegenden Teil bestehen.

Aus der DE-A-2 349 944 ist es bekannt, eine Abtasteinheit direkt an einem Glasmaßstab zu führen und als Mitnehmerkupplung eine Blattfeder zu verwenden, die mit einem Kugelende in eine pfannenartige Aufnahme der Abtasteinheit eingreift und eine in einer räumlichen Diagonale des Maßstabes wirkende Resultierende hat, so daß sie einerseits die Kugel mit der Pfanne und anderseits die Führungen der Abtasteinheit mit dem Maßstab in Eingriff hält. Varianten dieser Konstruktion sehen eine zusätzliche Führung der Abtasteinheit mit Laufrollen vor, wobei diese Laufrollen auch an zum Maßstab parallelen Führungsflächen eines Schutzgehäuses für den Maßstab angreifen können.

Aus der Zeitschrift "Messen und Prüfen/Automatik" Juli/August 1974, Seiten 435 - 439 ist es bekannt, als Kupplung zwei gekreuzte Rollen vorzusehen, die durch Federn zusammengehalten werden. Andere Kupplungen verwenden für die Kupplung knicksteife Drähte und Blattfedern.

Aus der DE-A-25 10 219 bzw. der DE-B-28 45 542 sind Konstruktionen bekannt, bei denen der eine Kupplungsteil eine gehärtete Metallkugel trägt und der andere Kupplungsteil eine normal zur Meßrichtung verlaufende ebene Fläche auf einem Hartmetallkörper aufweist, wobei Federn vorgesehen sind, die die beiden Kupplungsteile in Eingriff halten. Diese Federn können aus mehrfach gekrümmten, an den beiden Kupplungsteilen angreifenden Federklammern bestehen. Zusätzlich zu diesen Federklammern werden etwa normal zur Wirkungsrichtung der Führungselemente der Abtasteinheit auf die zugeordnete Führungen wirkende, gegebenenfalls einstellbare Federn in Form von Schraubenfedern verwendet, um die Führungselemente mit den zugeordneten Führungen in Eingriff zu halten.

Die bekannten Kupplungskonstruktionen sind in der Herstellung aufwendig, haben einen großen Platzbedarf und erfordern besondere Aufmerksamkeit bei der Anbringung bzw. Montage der die Kupplung spielfrei haltenden Federn sowie der die Abtasteinheit mit den Führungen in Eingriff haltenden Federn. Ein grundsätzlicher Nachteil von Federkonstruktionen besteht darin, daß alle einsetzbaren Federn zu Schwingungen angeregt werden können, so daß man vielfach wesentlich stärkere Andrückkräfte für die Kupplungselemente und die Führungselemente einsetzt, als die für die Mitnahme der Abtasteinheit bzw. deren einwandfreie Führung an den entsprechenden Führungsflächen bei dem gegebenen, meist sehr geringen Gewicht der Abtasteinheit an sich notwendig wäre.

Aufgabe der Erfindung ist die Schaffung eines Längenmeßsystemes der eingangs genannten Art, bei dem die spielfreie Kupplung mit einfachen, leicht herstellbaren Teilen verwirklicht werden kann, die Montage und Einstellung des Meßsystems und der Kupplung vereinfacht wird und bei dem nach einer Weiterbildung auch das Problem einer exakten Führung der Abtasteinheit mit einfachen Mitteln gelöst ist.

Die gestellte Aufgabe wird durch die im Patentanspruch 1 angegebenen Merkmale gelöst.

Die beiden Kupplungsteile ermöglichen über die Länge ihrer gewölbten Eingriffsflächen eine Relativverstellung von Mitnehmer und Abtasteinheit quer zur Meßrichtung, wobei die Kupplungsteile in jeder Stellung etwa punktförmig aneinanderliegen. Durch die Verwendung von Dauermagneten bzw. Dauermagnet-Magnetankerkombinationen kann die Anordnung so getroffen werden, daß die einzige Berührungsstelle zwischen Abtasteinheit und Mitnehmer die punktförmige Berührungsstelle zwischen den beiden Kupplungsteilen wird. Dies erhöht die konstruktive Freiheit bei der Zuordnung von Abtasteinheit und Mitnehmer und verhindert wirksam die Übertragung von Vibrationen des Mitnehmers auf die Abtasteinheit, welche Vibrationen bisher ein Hauptgrund dafür waren, die Federkräfte relativ hoch zu bemessen.

Eine einfache Ausgestaltung der Kupplungsteile entnimmt man dem Anspruch 2. Der Durchmesser der dort angegebenen Teile kann in der Größenordnung von 1 mm liegen, die Teile können poliert oder gehärtet sein, wobei sich herstellungstechnisch wegen der Möglichkeit der Formung in einem Ziehvorgang keine Schwierigkeiten ergeben. Ein wesentlicher Vorteil, der sich bei der erfindungs- gemäßen Ausbildung ergibt, besteht darin, daß die Kupplung hergestellt bzw. bei der Demontage gelöst werden kann, ohne daß dazu wie bei der Verwendung von Federn mechanische Elemente (z. B. Federhalterungen) betätigt werden müssen. Wenn die zueinander gerichteten Seiten der Dauermagnete gegensinnig gepolt sind, kann bei der Montage die Anziehungskraft der Magnete ausgenützt werden, die dann bei der Demontage zu überwinden ist, wogegen bei gleichsinnig gepolten, zueinander weisenden Seiten der Magnete bei der Montage die Abstoßkräfte überwunden werden müssen und die Demontage durch diese Abstoßkräfte erleichtert wird.

Die Magnete müssen nicht unmittelbar im Kupplungsbereich wirken. Es ist vielmehr auch möglich, die Magnete in größerem Abstand von der Kupplung vorzusehen. Für eine Feinjustierung ist es ferner möglich, den einen Kupplungsteil mit der zugeordneten Abtasteinheit bzw. dem Mitnehmer über eine Einstelleinrichtung zu verbinden, um so eine exakte Längsrelativstellung von Abtasteinheit und Mitnehmer herzustellen.

Es ist auch möglich, die für die Spielfreihaltung der Kupplung eingesetzten Dauermagnete oder eigene Dauermagnete bzw. Magnet-Magnetankerkombinationen dafür zu verwenden, die Führungselemente der Abtasteinheit mit den zugeordneten Führungen des Maßstabes oder eines Maßstabgehäuses in Eingriff zu halten, also die Einhaltung der gewünschten Relativstellung der Abtasteinheit zum Maßstab zu gewährleisten.

Eine dieser Möglichkeiten ist im Anspruch 3 angegeben. Die Neigung der Wirkungsachse kann sowohl durch Einstellung der Längsachsen der Magnete auf diese Achse als auch dadurch bewerkstelligt werden, daß die Magnete am Mitnehmer und an der Abtasteinheit in Längs- bzw. Querrichtung versetzt werden, so daß sie sowohl in Maßstablängsrichtung wirkende Kräfte zur Erzeugung des spielfreien Kupplungseingriffes als auch quer zur Maßstablängsrichtung wirkende Kräfte für den Führungseingriff hervorrufen.

Man kann auch eine Konstruktion nach Anspruch 4 wählen. Mehrere Magnet- bzw. Magnetankerkombinationen werden bevorzugt bei langgestreckten Abtasteinheiten verwendet, wenn die Kupplung an einem Ende der Abtasteinheit angreift.

Vor allem bei Verwendung zusätzlicher Magnete kann eine Ausführung gemäß Anspruch 5 vorteilhaft sein.

In allen Fällen kann man für eine Feineinstellung der wirksam werdenden Magnetkräfte die Magnete oder ihre Anker im Sinne einer Abstandsänderung vom zugeordneten anderen Element einstellbar oder verschwenkbar anbringen bzw. an der Vorder- oder Rückseite Abschirmungen bzw. einen magnetischen Nebenschluß erzeugende und damit die wirksame Magnetkraft verändernde Teile verstellbar anbringen.

Eine weitere entscheidende Vereinfachung der Gesamtkonstruktion wird durch eine Ausbildung gemäß Anspruch 6 erhalten. Hier sind die Dauermagnete bzw. Magnet-Ankerkombinationen zugleich Kupplungselement und Vorspannungserzeuger, deren Platzbedarf praktisch nicht größer ist als jener der Kupplungselemente allein bei früheren Konstruktionen.

Bevorzugt werden die Wirkungsachsen der Magnete bzw. Magnetankerkombinationen wie in Anspruch 7 angegeben, ausgerichtet.

Wenn man ein größeres Spiel in Querrichtung wünscht, kann man eine Ausführung nach Anspruch 8 wählen. Die demgemäß vorgesehenen Federn ermöglichen nicht nur ein größeres Spiel, sondern neigen auch nicht zu Schwingungen, wobei sie teilweise durch die Magnetwirkung und die Haftkraft der Kupplungselemente aneinander gedämpft werden, wenn diese aus Magneten bzw. Magnet-Ankerkombinationen bestehen.

Weitere Einzelheiten des Erfindungsgegenstandes entnimmt man der nachfolgenden Zeichnungsbeschreibung.

In der Zeichnung ist der Erfindungsgegenstand beispielsweise veranschaulicht. Es zeigen
- Fig. 1: ein erfindungsgemäßes Längenmeßsystem in schematisierter Darstellungsweise in Ansicht bei im Teilschnitt dargestelltem Maßstab,
- Fig. 2: eine Variante zu Fig. 1 ebenfalls in Ansicht,
- Fig. 3: als Detail zu den Fig. 1 und 2 die spielfreie Kupplung in Seitenansicht,
- Fig. 4: ein weiteres Längenmeßsystem in Ansicht bzw. Teilschnitt durch den Maßstab,
- Fig. 5: eine Draufsicht auf den Mitnehmer und die Abtasteinheit zu Fig. 4, wobei der Maßstab nur in seinen Umrissen strichpunktiert angedeutet wurde,
- Fig. 6: ein weiteres Längenmeßsystem in der den Fig.1 und 4 entsprechenden Darstellungsweise,
- Fig. 7: ein Längenmeßsystem im Querschnitt,
- Fig. 8: ein weiteres Längenmeßsystem ebenfalls im Querschnitt,
- Fig. 9: einen Querschnitt durch ein aus Maßstab und Abtasteinheit bestehendes, mit einem Mitnehmer gekuppeltes Längenmeßsystem im Anbringungsbereich der die Kupplung herstellenden Dauermagnete,
- Fig.10: eine Schrägansicht zur Veranschaulichung des Zusammenwirkens von Kupplungsmagnet und Magnetanker und
- Fig.11: einen weiteren Querschnitt durch das Längenmeßsystem im Anbringungsbereich einer Andrückfeder.

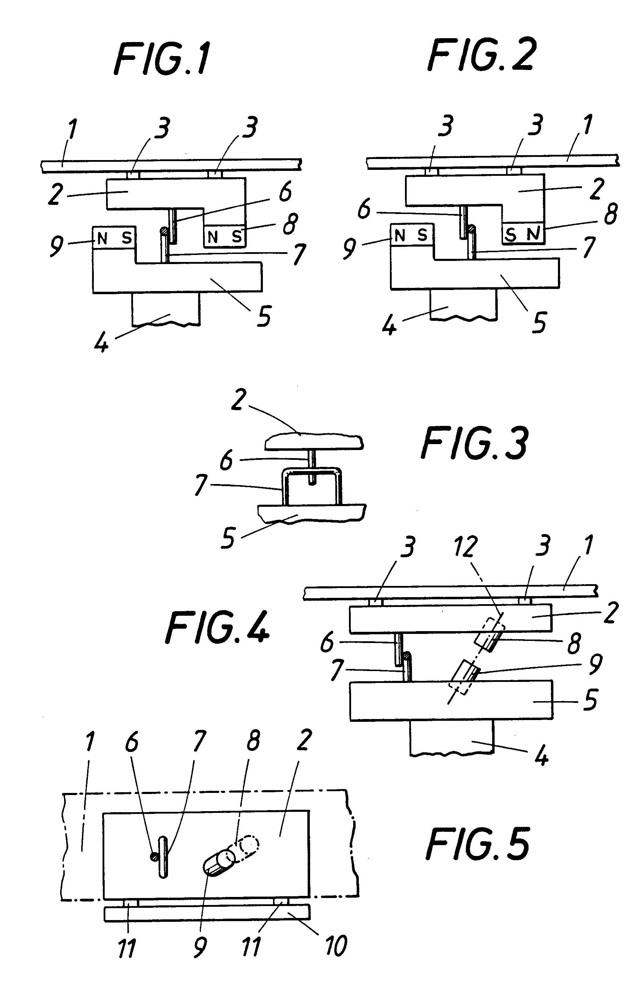

Nach den Fig. 1 bis 3 ist ein Maßstab 1 vorgesehen, auf dem eine Meßteilung angebracht ist. Zur Abtastung der Meßteilung dient eine Abtasteinheit 2, die mit Gleitschuhen 3 direkt am Maßstab abgestützt und geführt ist und die von unten her an den Maßstab angedrückt wird. In den Fig. 1 und 3 wurden keine Andrückelemente dargestellt. Ein die Verbindung mit dem bei der Messung zu verstellenden Teil, etwa dem Schlitten einer Werkzeugmaschine herstellender Mitnehmer 4 trägt oben einen sich über einen Großteil der Länge der Abtasteinheit 2 erstreckenden Ansatz 5.

Zur Erzielung einer spielfreien Kupplung zwischen dem Mitnehmer 4 und der Abtasteinheit 2 - die auch um den Maßstab 1 herumreichende und etwa eine Beleuchtungseinrichtung für Abtastelemente tragende Teile bei optoelektronischer Abtastung der Maßstabteilung aufweisen kann - ist nach den Fig. 1 bis 3 eine Kupplung aus zwei Kupplungselementen 6, 7 vorgesehen. Das Kupplungselement 6 besteht aus einem normal zur möglichen Verstellrichtung der Abtasteinheit 2 entlang des Maßstabes 1 vorstehenden Stift 6 und das Kupplungselement 7 aus einem Bügel mit normal zum Stift 6 und quer zur Meßrichtung verlaufendem Steg. Die Teile 6 und 7 überkreuzen einander und besitzen einen runden Querschnitt. Um die Teile 6 und 7 in bleibendem, punktförmigem Eingriff zu halten, sitzen an der Abtasteinheit 2 und am Teil 5 Dauermagnete 8, 9, die nach Fig. 1 mit gegengleich gepolten Seiten zur Kupplung 6, 7 und zueinander weisen und durch ihre Anziehungskraft die Kupplungselemente 6, 7 in Eingriff halten. Nach Fig. 2 sind die Dauermagnete 8, 9 mit den gleichen Polen zueinander gerichtet, üben daher aufeinander eine Abstoßkraft aus, weshalb der Stift 6 gegenüber der Fig. 1 an der anderen Seite des Elementes 7 angreift.

Wie die Fig. 4 und 5 zeigen, kann die Abtasteinheit 2 den Maßstab 1 an einer freien Längskante mit einer Leiste 10 umgreifen, wobei diese Leiste 10 über Gleiter 11 auch an dieser Maßstabseite abgestützt ist. Um die Gleiter 3 und 11 mit den zugeordneten Führungsflächen des Maßstabes 1 und zugleich die hier am Ende des Teiles 5 angebrachten Kupplungselemente 6, 7 in Eingriff zu halten, sind die Magnete 8, 9 so angeordnet, daß ihre Wirkungsachse 12 sowohl in der Seitenansicht nach Fig. 4 als auch in der Draufsicht nach Fig. 5 unter einem Anstellwinkel zur Verstellrichtung geneigt ist. Der besseren Übersichtlichkeit halber wurden die Magnete 8, 9 um diesen Anstellwinkel geneigt gezeichnet, sie können aber auch in die Teile 2, 5 versenkt und mit ihren dann z. B. normal zur Verstellrichtung verlaufenden Mittelachsen im Abstand voneinander auf der Wirkungsachse 12 versetzt angebracht sein. In jedem Fall erzeugen die Magnete 8, 9 eine Resultierende, von der eine Komponente die Teile 6, 7 in Eingriff hält und die beiden anderen Komponenten die Gleiter 3 mit der Flachseite bzw. die Gleiter 11 mit der einen Längsseite des Maßstabes 1 in Eingriff halten.

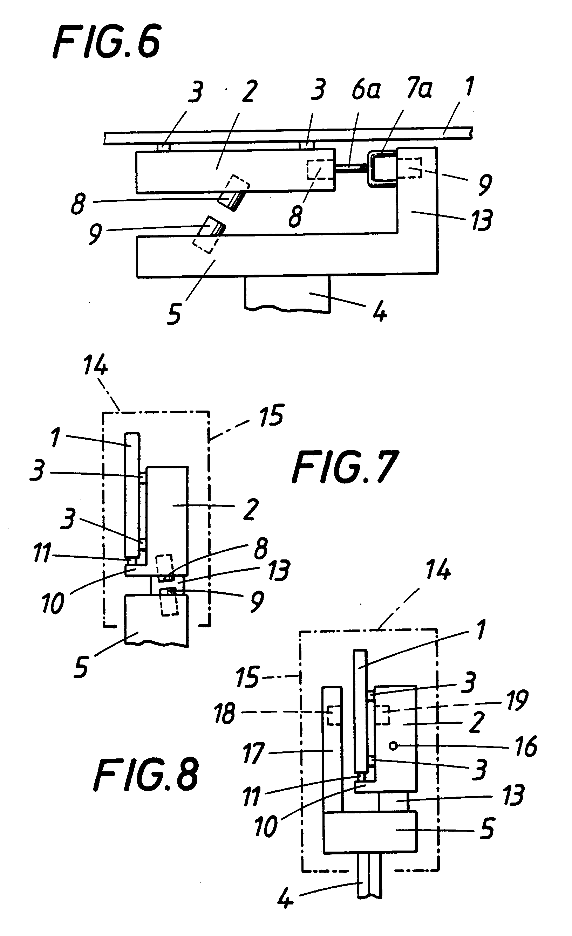

Nach Fig. 6 ist die Kupplung aus zwei dem Teil 7 entsprechenden Bügeln 6a, 7a gebildet, die mit ihren normal zueinander und zur Verstellrichtung angeordneten Stegteilen am Ende der Abtasteinheit 2 aneinanderliegen, wobei am Teil 5 ein über das Ende der Abtasteinheit 2 vorragender Ansatz 13 vorgesehen ist. Die Magnete 8, 9 können (einander abstoßend) analog zu den Fig. 4 und 5 vorgesehen werden. Wird über die Magnete nur angestrebt, die Kupplungsteile 6a, 7a in Eingriff zu halten, können die Magnete auch in der strichliert eingezeichneten Anordnung einander anziehend vorgesehen werden.

Nach Fig. 7 ist der Maßstab 1 in stehender Anordnung im Kopfteil 14 eines Schutzgehäuses 15 befestigt und die Abtasteinheit 2 ist wieder mit Gleitern 3, 11 am Maßstab geführt. Die Kupplung 6a, 7a ist in sinngemäß der Fig. 6 entsprechender Weise am nicht sichtbaren Ende der Abtasteinheit 2 vorhanden und die Magnete 8, 9 halten die Kupplungselemente und die Gleiter 3, 11 mit den Führungsflächen in Eingriff.

Bei der Ausführung nach Fig. 8 ist der Teil 5 so wie in Fig. 7 erwähnt mit der Abtasteinheit 2 gekuppelt, wobei die Kupplungsstelle mit 16 angedeutet wurde. Zusätzlich zu den nicht dargestellten Magneten 8, 9 können in der Abtasteinheit 2 und an einem über die Rückseite des Maßstabes 1 hochstehenden Träger 17 zusammenwirkende Magnete 18, 19 vorgesehen werden, die durch den Glasmaßstab 1 hindurchwirkend das Bestreben haben, die Abtasteinheit mit ihren Gleitern 3, 11 an den Maßstab anzudrücken.

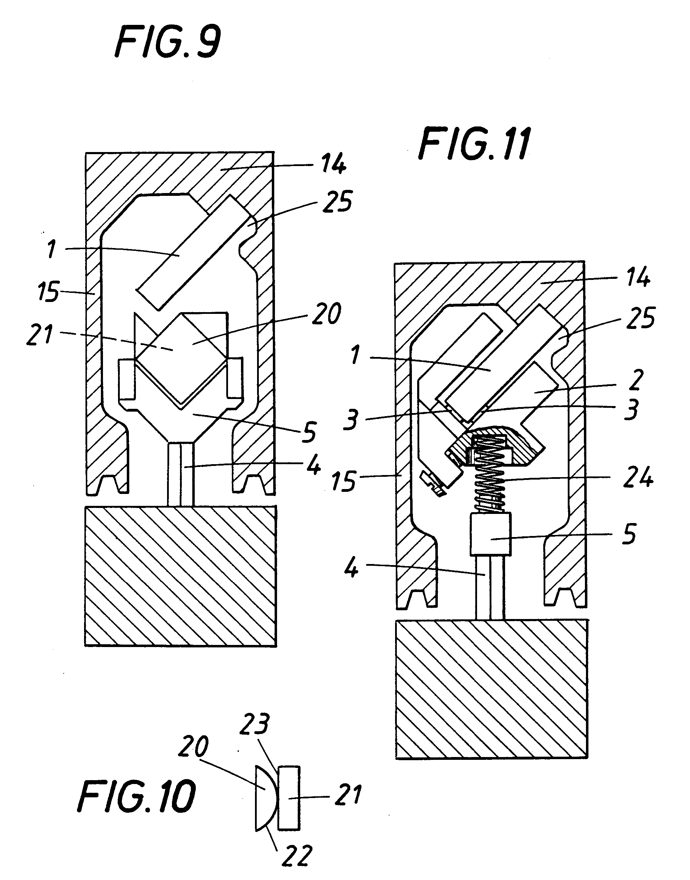

Nach den Fig. 9 bis 11 wird die Abtasteinheit 2 mit aus Kugellagern 3 bestehenden Rollen unmittelbar am Maßstab 1 geführt und von unten her an den Maßstab 1 angedrückt. Zur Erzielung einer spielfreien Kupplung zwischen dem Mitnehmer 4 und der Abtasteinheit 2 dienen ein Dauermagnet 20 und ein Magnetanker 21, die (siehe Fig. 10) mit parallel zur Verstellrichtung angeordenten Wirkungsachsen an der Abtasteinheit 2 und am Ansatz 5 des Mitnehmers 4 angebracht sind und in Form von Zylindersegmenten einander zugekehrte, gewölbte Flächen 22, 23 aufweisen. Die Teile 20, 21 sind mit rechtwinkelig zueinanderstehenden und gegenüber dem Teil 5 um 45° geneigten Zylinderachsen angeordnet und halten die Teile 5 und 2 bleibend im spielfreien Eingriff. Im Abstand von der Magnet-Ankerkombination 20, 21 ist am Teil 5 wenigstens eine Druckfeder 24 abgestützt, welche die Rollen 3 in Dauereingriff mit den beiden Führungsflächen des Maßstabkörpers 1 hält. Der Maßstabkörper 1 ist in einer Nut 25 des rohrförmigen Schutzgehäuses 15 festgehalten. Weitere Einzelheiten wurden nicht dargestellt, da sie sich aus der vorstehenden Beschreibung der anderen Figuren ergeben.

## Patentansprüche

1. Längenmeßsystem, mit einem Maßstab (1) und einer diesem entlang verstellbaren Abtasteinheit (2), die am Maßstab (1) selbst oder an eigenen, zum Maßstab parallelen Führungen geführt und mit einem Mitnehmer (4) über eine spielfreie Kupplung gekuppelt ist, die einen mit dem Mitnehmer (4) verbundenen Kupplungsteil (7, 20) und einen mit der Abtasteinheit (2) verbundenen Kupplungsteil (6, 21) aufweist, welche, zusammenwirkend, eine Relativverstellung des Mitnehmers (4) gegenüber der Abtasteinheit (2) quer zur Meßrichtung zulassen,um im wesentlichen normal zur Verstellrichtung verlaufende Achsen gewölbte Eingriffsflächen (22, 23) aufweisen, deren Wölbungsachsen einander kreuzen und die einander an einer Stelle annähernd punktförmig berühren, wobei die Kupplungsteile durch zwischen Mitnehmer (4) und Abtasteinheit (2) wirkende Vorspannelemente (8, 9, 20, 21) in dauerndem Eingriff gehalten sind, dadurch gekennzeichnet, daß die beiden Kupplungsteile (6, 7, 20, 21) starr am Mitnehmer (4) bzw. der Abtasteinheit (2) angebracht und als die sie in Eingriff haltenden Vorspannelemente am Mitnehmer (4) und der Abtasteinheit (2) einander zugeordnet angebrachte Dauermagnete (8, 9) oder Dauermagnet-Magnetankerkombinationen (20, 21) vorhanden sind.

2. Längenmeßsystem nach Anspruch 1, dadurch gekennzeichnet, daß die Kupplungsteile (6, 7, 6a, 7a) aus in ihrem möglichen Anlagebereich quer zur Meßrichtung starr angebrachten Rundstiften bestehen, die einander rechtwinkelig kreuzen.

3. Längenmeßsystem nach Anspruch 1 oder 2, dadurch gekennzeichnet, daß die Wirkungsachsen (12) der einander zugeordnet angebrachten Magnete (8, 9) oder Magnet-Magnetankerkombinationen zur Verstellrichtung geneigt sind, so daß sie eine resultierende Magnetkraft erzeugen, von der eine Komponente die Kupplungselemente (6, 7, 6a, 7a) und wenigstens eine weitere Komponente die Abtasteinheit (2) mit dem Maßstab (1) bzw. mit ihrer oder ihren Führungen in Eingriff hält.

4. Längenmeßsystem nach einem der Ansprüche 1 bis 3, dadurch gekennzeichnet, daß zusätzliche Dauermagnete (18, 19) bzw. Magnet-Magnetankerkombinationen an Mitnehmer (4) und Abtasteinheit (2) angebracht sind, die die Abtasteinheit (2) mit dem Maßstab (1) oder als Gleiter (3, 11) oder Laufrollen ausgebildete Führungselemente der Abtasteinheit mit den zugeordneten Führungen in Eingriff haltende Kräfte erzeugen.

5. Längenmeßsystem nach einem der Ansprüche 1 bis 4, dadurch gekennzeichnet, daß bei wenigstens einer Dauermagnet- bzw. Magnet-Magnetankerkombination (18, 19) ein Dauermagnet oder Magnetanker (18) in der Abtasteinheit (2) an der Vorderseite des Maßstabes (1) und der zugeordnete, mit dem Mitnehmer (4) verbundene Dauermagnet oder Magnetanker (19) an der Rückseite des aus Glas hergestellten Maßstabes (1) unter Freihaltung eines Spielabstandes angebracht ist.

6. Längenmeßsystem nach einem der Ansprüche 1 bis 5, dadurch gekennzeichnet, daß die Kupplungsteile selbst aus den Dauermagneten oder aus Dauermagnet und Magnetanker (20, 21) bestehen, wobei die Dauermagnete bzw. der Dauermagnet (20) und der Magnetanker (21) selbst mit den gewölbten Eingriffsflächen (22, 23) versehen sind, welche einander rechtwinkelig kreuzend angebracht sind.

7. Längenmeßsystem nach Anspruch 6, dadurch gekennzeichnet, daß die Wirkungsachsen der Magnete bzw. Magnet-Ankerkombinationen (20, 21) in der Verstellrichtung verlaufen.

8. Längenmeßsystem nach einem der Ansprüche 1 bis 7, dadurch gekennzeichnet, daß zusätzlich zu den Dauermagneten bzw. Dauermagnet-Magnetankerkombinationen (20, 21) an Mitnehmer (4, 5) und Abtasteinheit (2) Federn (24) mit quer zur Verstellrichtung gerichteter Wirkungsachse angebracht sind, die die Abtasteinheit (2) mit dem sie führenden Maßstab (1) in Eingriff haltende Kräfte erzeugen.

## Claims

1. A length-measuring system comprising a scale (1) and a scanning unit (2) adjustable along the scale and guided on the scale (1) itself or on separate guides parallel to the scale and coupled to a cam (4) via a clearance-free coupling comprising a coupling part (7, 20) connected to the cam (4) and a coupling part (6, 21) connected to the scanning unit (2), the parts cooperating to permit motion of the cam (4) relative to the scanning unit (2) transversely to the direction of measurement, and having engagement surfaces (22, 23) convex around axes substantially at right angles to the direction of adjustment, the axes of convexity intersecting one another and the surfaces being in contact at one place approximately at a point, the coupling parts being held in permanent engagement by prestressing elements (8, 9, 20, 21) acting between the cam (4) and the scanning unit (2), characterised in that the two coupling parts (6, 27, 20, 21) are rigidly disposed on the cam (4) or the scanning unit (2) and the prestressing elements holding them in engagement are permanent magnets (8, 9) or permanent magnet and armature combinations (20, 21) associated with one another on the cam (4) and the scanning unit (2).

2. A length-measuring system according to claim 1, characterised in that the coupling parts (6, 7, 6a, 7a) comprise round pins which intersect one another at right angles and are rigidly secured transversely to the direction of measurement in their possible area of abutment.

3. A length-measuring system according to claim 1 or 2, characterised in that the axes of action (12) of the associated magnets (8, 9) or magnet and armature combinations are at an angle to the direction of adjustment, so that they generate a resulting magnetic force having one component which holds the coupling elements (6, 7, 6a, 7a) in engagement and at least one additional component which holds the scanning unit (2) in engagement with the scale (1) or with the guide or guides thereof.

4. A length-measuring system according to any of claims 1 to 3, characterised in that additional permanent magnets (18, 19) or magnet and armature combinations are disposed on the cam (4) and scanning unit (2) and generate forces which hold the scanning unit (2) in engagement with the scale (1) or hold scanning-unit guide elements in the form of slides (3, 11) or runners in engagement with the associated guides.

5. A length-measuring system according to any of claims 1 to 4, characterised in that in the case of at least one permanent magnet or magnet and armature combination (18, 19), one permanent magnet or armature (18) is disposed in the scanning unit (2) on the front of the scale (1) and the associated permanent magnet or armature (19) connected to the cam (4) is disposed on the back of the scale (1), which is made of glass, leaving a clearance space.

6. A length-measuring system according to any of claims 1 to 5, characterised in that the coupling parts themselves consist of the permanent magnets or the permanent magnet and armature (20, 21), the permanent magnets or the permanent magnet (20) and the armature (21) themselves being provided with the convex engagement surfaces (22, 23) which intersect at right angles.

7. A length-measuring system according to claim 6, characterised in that the axes of action of the magnets or magnet-armature combinations (20, 21) extend in the direction of adjustment.

8. A length-measuring system according to any of claims 1 to 7, characterised in that, in addition to the permanent magnets or permanent magnet and armature combinations (20, 21), springs (24) are disposed on the cam (4, 5) and scanning unit (2) and have their axis of action extending transversely to the direction of adjustment and generate forces holding the scanning unit (2) in engagement with the scale (1) guiding it.

## Revendications

1. Système de mesure de longueur, avec une règle graduée (1) et une unité d'exploration (2), susceptible de se déplacer sur celle-ci en vue d'un réglage, en étant guidée sur la règle graduée (1) elle même ou sur des guidages propres parallèles à la règle graduée, et couplée à un organe d'entraînement (4), par l'intermédiaire d'un couplage sans jeu, présentant une partie de couplage (7, 20) reliée à l'organe d'entraînement (4) et une partie de couplage (6, 21), reliée à l'unité d'exploration (2) et permettant, par coopération, un déplacement de réglage relatif entre l'organe d'entraînement (4) et l'unité d'exploration (2), transversalement par rapport à la direction de mesure, présentant des surfaces d'engagement (22, 23) incurvées autour d'axes s'étendant sensiblement perpendiculairement à la direction de réglage et dont les axes d'incurvation se croisent et qui viennent mutuellement en contact en un endroit à peu près ponctuel, les parties de couplage étant maintenues en contact permanent au moyen d'éléments (8, 9, 20, 21) de précontrainte, agissant entre l'organe d'entraînement (4) et l'unité d'exploration (2),
caractérisé en ce que les deux parties de couplage (6, 7, 20, 21) sont montées rigidement sur l'organe d'entraînement (4), respectivement sur l'unité d'exploration (2), et sont montés sur l'organe d'entraînement (4), et l'unité d'exploration (2), à titre d'éléments de précontrainte, les maintenant en contact, soit sous forme d'aimants permanents (8, 9) ou de combinaisons aimant permanent-induit magnétique (20, 21).

2. Système de mesure de longueur selon la revendication 1,
caractérisé en ce que les parties de couplage (6, 7, 6a, 7a) sont composées de tiges cylindriques, montées rigidement dans leur zone d'appui possible, transversalement à la direction de mesure et se croisant mutuellement à angle droit.

3. Système de mesure de longueur selon la revendication 1 ou 2,
caractérisé en ce que les axes d'action (12) des aimants (8, 9) ou des combinaisons aimant permanent-induit magnétique (20, 21) montés en association mutuelle sont inclinés par rapport à la direction de réglage, de sorte qu'ils produisent une force magnétique résultante, dont une composante produit un contact entre les éléments de couplage (6, 7, 6a, 7a) et au moins une autre composante maintient un contact entre l'unité d'exploration (2) et la règle graduée (1), avec son ou ses guidages.

4. Système de mesure de longueur selon l'une des revendications 1 à 3,
caractérisé en ce que des aimants permanents (18, 19) supplémentaires, respectivement des combinaisons aimant-induit magnétique sont montées sur l'organe d'entraînement (4) et l'unité d'exploration (2), en produisant des forces maintenant un contact entre l'unité d'exploration et la règle graduée (1) ou d'éléments de guidage, réalisés sous forme de curseur (3, 11) ou de galets de roulement, de l'unité d'exploration et les guidage associés.

5. Système de mesure de longueur selon l'une des revendications 1 à 4,
caractérisé en ce que, dans le cas où il y a au moins une combinaison aimant permanent ou aimant-induit magnétique (18, 19), un aimant permanent ou un induit magnétique (18) est monté dans l'unité d'exploration, en face avant de la règle graduée (1), et que l'aimant permanent ou l'induit magnétique (19) associé, relié à l'organe d'entraînement (4), est monté sur la face arrière de la règle graduée (1) en verre, en laissant subsister un interstice de jeu.

6. Système de mesure de longueur selon l'une des revendications 1 à 5,
caractérisé en ce que les parties de couplage elles mêmes sont constituées par les aimants permanents ou par un aimant permanent et un induit magnétique (20, 21), les aimants permanents ou l'aimant permanent (20) et l'induit magnétique (21) étant eux mêmes pourvus des surfaces de contact incurvées (22, 23), montées de façon à se croiser à angle droit.

7. Système de mesure de longueur selon la revendication 6,
caractérisé en ce que les axes d'action des aimants, respectivement des combinaisons aimant-induit magnétique (20, 21) s'étendant dans la direction de réglage.

8. Système de mesure de longueur selon l'une des revendications 1 à 7,
caractérisé en ce qu'en plus des aimants permanents et des combinaisons (20, 21) aimant permanent-induit magnétique, sont montés, sur l'organe d'entraînement (4, 5) et l'unité d'exploration (2), des ressorts (24), avec un axe d'action orienté transversalement par rapport à la direction de réglage et produisant des forces maintenant en contact l'unité d'exploration (2) et la règle graduée (1) qui la guide.
